(19) Europäisches Patentamt

European Patent Office

Office européen des brevets

(11) **EP 1 011 106 A2**

(12) **EUROPEAN PATENT APPLICATION**

(43) Date of publication:
21.06.2000 Bulletin 2000/25

(51) Int. Cl.$^7$: **G21C 3/328**

(21) Application number: 99124877.4

(22) Date of filing: 16.12.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 18.12.1998 US 215874

(71) Applicant:
**Siemens Power Corporation
Richland, WA 99352-0130 (US)**

(72) Inventors:
• **Farawila, Yousef M.
Richalnd, WA 99352 (US)**
• **Timmons, Darrol H.
Richalnd, WA 99352 (US)**

(74) Representative:
**Kahlhöfer, Hermann, Dipl.-Phys. et al
Patent- und Rechtsanwälte,
Bardehle,Pagenberg,Dost,Altenburg,Geissler,Is
enbruck
Uerdinger Str. 5
40474 Düsseldorf (DE)**

(54) **Apparatus and method for void distribution measurement in an array of emulated nuclear fuel rods using neutron detectors**

(57) An emulated nuclear fuel rod for determining the void distribution in a simulated nuclear fuel assembly.

FIG 1

## Description

Field of the Invention

The present invention relates to nuclear fuel assemblies for water reactors, and more particularly the testing of simulated nuclear fuel assemblies to determine the void distribution in the simulated fuel assemblies. More specifically, an apparatus and process is disclosed for determining the void distribution in the simulated fuel assembly for all the emulated fuel rods within the assembly, or for any one or more emulated fuel rods within the assembly.

Background

The determination of the distribution of void fraction, or equivalently coolant/moderator density, in subchannels within water reactor fuel assemblies, is becoming more important due to design heterogeneities of boiling water and pressurized water reactor fuel assemblies and the continuing desire to achieve greater accuracy in the performance of void fraction prediction calculations.

In nuclear reactors intended for the generation of power, nuclear fuel assemblies are customarily of the rod type in which elongated nuclear fuel rods are supported or positioned at their lower and upper ends between lower and upper tie plates, respectively, and which are arranged in closely spaced parallel arrays in generally square configurations and restrained from lateral vibration or supported or positioned by spacers located along the height of the fuel assembly. As is well known, each fuel assembly for a boiling water type of water cooled reactor (BWR) is typically enclosed by an outer channel, usually square, which confines the coolant which enters that fuel assembly to that particular fuel assembly until it exits the assembly at the top of the reactor core. The coolant passing through the fuel assembly consists of a mixture of liquid water and steam. At the bottom entrance of the fuel assembly, the coolant is liquid water and as it flows upward through the assembly, power is transferred from the fuel rods to the coolant, steam is produced, and the fraction of steam in the coolant is increased. As a result of a high volume fraction of steam in the upper region of the BWR core, the upper region of the core becomes under-moderated and over-enriched due to the presence of too few hydrogen atoms compared to the number of fissionable uranium or plutonium atoms.

Many attempts have been made in the prior art to increase the amount of moderator in the upper portions of a BWR fuel assembly to improve neutronic efficiency. A commonly used design has been to incorporate one or more water rods, inner water channels or other coolant moderator flow conduits or paths within which single phase liquid water as the coolant moderator flows from the bottom of the assembly toward the top at a rate sufficient to prevent boiling of this flow. However, there are drawbacks to the designs which include such features. For example, a reduction in critical heat flux (CHF) performance occurs because the coolant moderator flow that must be supplied to the water rods/channels to preclude boiling inside these rods/channels occurs at the expense of the coolant moderator flow available for cooling the nuclear fuel rods. It is also known in boiling water reactor fuel designs to include within fuel assemblies part-length fuel rods in order to mitigate the over-enriched and under-moderated conditions in the upper region of the core. Accordingly, some of the fuel rods in a fuel assembly are truncated at some intermediate elevation in the core. This leaves an unfilled coolant channel or subchannel above that elevation. This subchannel has reduced hydraulic resistance resulting, in part, from the absence of the cross-sectional area of the part length fuel rod. The space that would have been occupied by the part length fuel rod plus the four flow subchannels that surround the location of the part length fuel rod form one large open space or subchannel above the part length fuel rod. The large subchannel is larger than the other coolant flow subchannels formed by full length fuel rods. Increased mass flux occurs in the large subchannel and as a result, reduced mass flux occurs in the surrounding subchannels. Cross flows into and out of the large subchannel occur especially at (a) the beginning of the large subchannel immediately above the top of the part length fuel rod as well as at (b) spacer locations above the part length fuel rods. Such cross flows can deplete liquid film from the adjacent and surrounding full length fuel rods. Heat transfer, and more particularly burnout performance can be adversely affected by such cross-flows.

In addition to the upper region being under-moderated and over-enriched, a further problem in typical boiling water reactors is that the central region along the axes of the fuel assemblies may be under-moderated and over-enriched. In order to increase the amount of moderator so as to improve neutron moderation and economy, an elongated central water channel can be provided which forms a centrally disposed path for the flow of moderator/coolant along the length of, but physically separated from, the fuel rods. Sufficient liquid coolant is circulated through the central channel to keep the contained coolant largely or completely in the liquid phase. The central water channel can have any cross-sectional area and/or geometry, positioned centrally and symmetrically within the outer channel, or asymmetrically displaced from the central axis within the outer channel, and can be oriented around its central axis so that its walls which extend the length of the assembly are either parallel or non-parallel to the walls of the outer channel.

Another important attribute of a central water channel is that the void coefficient of reactivity is less negative. By having the void coefficient of reactivity less negative, reactor stability improves by reducing the coupling between core reactivity and core moderator thermal hydraulic conditions. The moderator in the fuel assembly that is not within the central water channel and which is termed active coolant surrounds the nuclear fuel rods and is heated by means of conduction/convection. As reactivity increases, heating of the active coolant is increased. Increased heating of the active coolant results in greater steam void formation and a reduction in moderation. The increase in voids and reduced moderation results in reduced reactivity. Heating of the coolant/moderator which is within the central water channel is relatively small and is largely unaffected by the heat released from the fuel rods. Thus, an assembly with a central water channel has a greater fraction of moderator in the core that does not become void when reactivity increases. There is thus less decrease in reactivity to steam void formation.

Once the maximum quantity of nuclear fuel has been placed within the fuel assembly, further improvements in nuclear reactor operations could be achieved if the amount of power that could be safely produced within the fuel assembly were increased. Since reactor power levels are limited by the amount of coolant flowing through the assembly as well as by local heat transfer conditions present at the surface of the fuel rods, it is highly desirable that the spacer grid offer as little resistance to coolant flow as is possible.

It is well known that heat transfer and therefore power capability is enhanced if a continuous film of water is maintained on the surface of the nuclear fuel rods.

Prior art designs of the spacer grids also aid in, or contribute to, maintaining a water film on the fuel rod surfaces. Spacer grids, regardless of their design, remove or strip a portion of the liquid water which has condensed on the inner walls of the outer channel and outer wall of the central channel of boiling water reactor fuel assembly designs and transfer some of the condensed water to the fuel rod surfaces, thereby increasing the water film thickness on the fuel rods. Spacer grids also function to coalesce small liquid droplets present in the coolant flow into larger droplets and aid in directing greater quantities of such larger liquid droplets to the fuel rod surfaces contributing further to increasing the water film thickness on the fuel rods.

Thus, in view of the several above-described examples of design features in present boiling water reactors as well as future boiling water reactor and pressurized water reactor fuel assemblies, the determination of the distribution of void fraction, or equivalently coolant/moderator density, in subchannels within water reactor fuel assemblies, is becoming more important due to, as briefly discussed above, increased design heterogeneities of the fuel assembly and the continuing desire to achieve greater accuracy in the performance of void fraction prediction calculations. BWR simulator codes have relied on radial-fuel assembly-average void fraction instead of detailed void distribution in the subchannels within the fuel assembly or array of fuel rods which results in uncertainties in pin power distributions due to neglecting the variations of neutron moderating effects when each subchannel voiding is different from the average value. Uncertainties in hydraulic parameters such as flow rate and pressure drop across the fuel assembly can result as well.

Simulated nuclear reactor fuel assemblies are typically used to perform laboratory measurements of single-phase (liquid or vapor) and two-phase (liquid and vapor) fluid flow and of heat transfer under boundary conditions imposed to simulate the normal operation or an accident environment of a nuclear reactor fuel assembly. The apparatus or test assembly typically consists of a vertical array of tubes, typically 12 feet or longer, each of which has the same external diameter as the nuclear fuel rod(s) and which are arranged in the same configuration or lattice array or subarray as in an actual fuel assembly. Each of these emulated fuel rods is heated by an electrical current instead of being heated by a nuclear reaction. The simulated assembly is enclosed in a vessel through which coolant, typically water, is passed from bottom to top. The coolant is thereby directed into the space i.e. subchannels between the tubes where it is heated by the emulated fuel rods. Boiling of the coolant in the subchannels creates voids.

Since the void distribution in BWR subchannels has historically been too complex to accurately determine experimentally, accurate and detailed information and data regarding void distribution are not available. Such data would be used for design purposes and to verify and modify subchannel computer codes and/or be used directly to create more accurate correlations for the neutronic feedback to moderator density changes.

Direct measurements using probes inserted in the flow path of a subchannel has the problem of being intrusive as such probes influence the flow and void patterns they aim to determine due to their presence in the flow path, and their readings are affected by the unknown void distribution within the subchannel. Similarly, probes positioned on the heated rod surface are not sensitive to the subchannel core conditions.

Techniques which have been developed which measure void distributions directly in the subchannels are described in Electric Power Research Institute (EPRI) Report TR-106326, Void Fraction Technology for Design and Analysis, March 1997. This report presents a summary description and bibliography on several techniques for measuring void fraction including the utilization of fast neutron scattering and attenuation. Other void measurement techniques which utilize gamma rays, X-rays, and other concepts are also described. Other methods rely on measurement probes inserted into the coolant stream, thus disturbing the quantities they are measuring.

Prior void fraction measurements utilized radiation, mainly a source placed outside the test assembly and detector placed on the other side of the assembly. The attenuation of measured radiation intensity was correlated to average void content in the assembly. Largely gamma radiation was used, while X-ray radiation and neutron beams from sources external to the fuel assembly were also used in the past utilizing the same principle of varying attenuation depending on the void content.

A source and a detector was also positioned inside the fuel assembly as described in U.S. Patent No. 5,098,641. The technique of this patent utilizes the principle of gamma-radiation attenuation on the line-of-sight within a subchannel instead of a line-of-sight through many subchannels. The teachings of this patent fail to correctly account for the presence of a water film. It also fails to account for the effects of the distribution of water/voids within the subchannel which differ from the water film and distribution of water voids along the line-of-sight. The method of this patent cannot be used with multi-detectors and/or multi-sources simultaneously present in the fuel assembly as the radiation interference will render the data unusable.

Noise analysis techniques using incore neutron detectors have been used to make void fraction measurements in BWRs. An example which describes the investigation of axial void propagation velocity profiles in BWR fuel assemblies is presented in EPRI NP-2041, Project 1384-2, June 1982. The incore neutron detectors (commonly called Local Power Range Monitors, or LPRMs) used in this technique are distributed throughout a BWR core, spaced three feet apart axially and two feet apart radially. Additionally, the detectors are located outside the fuel assembly channel at the corner opposite the BWR control rod position. The major limitation of this detector configuration is its coarse spatial resolution, corresponding to the spacing of the detectors. Further, since the detectors are positioned outside the fuel assembly channel, the system is incapable of measuring the void distribution within the channel. Consequently, the primary applications of this technique is for determining void propagation velocity profiles and (potentially) as a flow sensor.

External source/detector arrangements were also used to infer information about the void distribution using tomography techniques as described in "Experiments On A Natural Circulation Loop From Void-fraction To Coupled Nuclear Thermal-Hydraulics," Ph.D. Thesis by Haico Kok, June 16, 1998, Delft University, Holland. It should be noted that the resulting errors are noticeable as reported void fractions in subchannels in symmetric positions differ significantly.

X-ray tomography techniques have been utilized (EPRI Report TR-106326 cited above) to visualize the two-phase flow patterns in simulated BWR test assemblies in Japan as well as in Sweden. X-ray tomography is expensive and is not sufficiently developed for full-scale rod arrays where the presence of many rods interferes with the accuracy of measurement using an external source and detector.

It would therefore be an advantage over the prior art to have an apparatus and method which is not intrusive and does not affect the measured quantity, has a high accuracy, and can measure the void distribution and average void content associated with from one emulated fuel rod to all of the emulated fuel rods in a simulated test nuclear fuel assembly.

Thus, there exists a need for a new apparatus and a new technique for measuring water moderator density or void fraction in the subchannels of an emulated fuel rod array.

Summary of the Invention

In accordance with the present invention, an emulated nuclear fuel rod is provided comprising a hollow tube within which is positioned a fissionable material, a neutron source and a neutron detector.

In accordance with another aspect of the present invention, an array of emulated nuclear fuel rods comprising a plurality of hollow tubes, a plurality of fissionable material wherein at least one of the plurality of fissionable material being positioned within a corresponding one of the plurality of hollow tubes, a plurality of neutron sources wherein at least one of the plurality of neutron sources being positioned within a corresponding one of the plurality of hollow tubes, and a plurality of neutron detectors wherein at least one of the plurality of neutron detectors being positioned within a corresponding one of the plurality of hollow tubes.

Brief Description of the Drawings

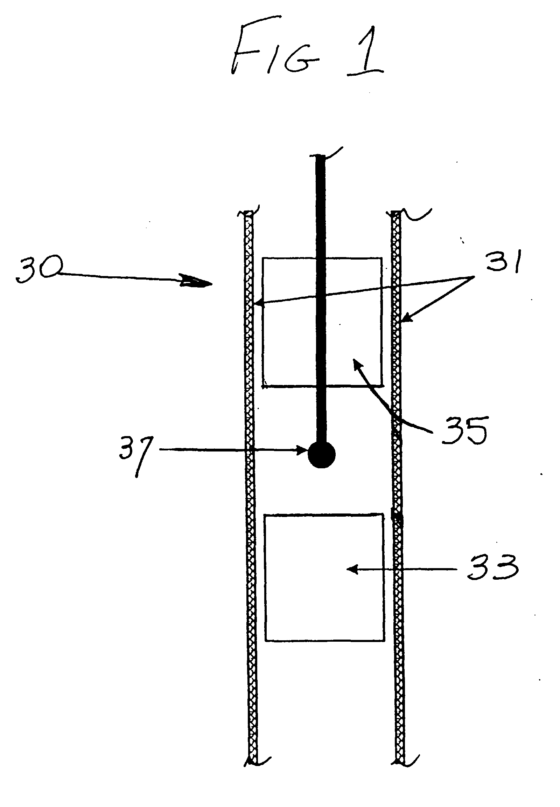

Figure 1 is an axial elevational cross-sectional view, foreshortened in length, of one of the emulated fuel rods shown in the simulated nuclear fuel assembly array depicted in Figure 2; and

Figure 2 is a cross-sectional view of a simulated BWR nuclear fuel assembly comprising generally a 10x10 array of emulated nuclear fuel rods with a centered 3x3 fuel rod array removed and replaced by a central water channel.

Detailed Description of the Present Invention

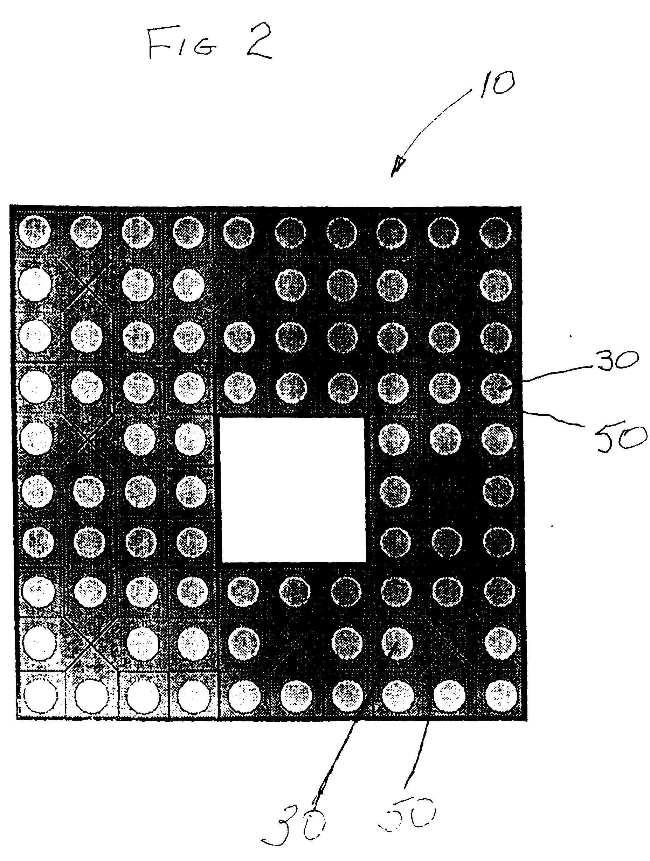

In accordance with the present invention, the Void Distribution Measurement Apparatus comprises neutron sources located inside several, preferably all, of emulated fuel rods 30 of a simulated test fuel assembly 10 as shown for example in the simulated fuel assembly depicted in a cross-sectional view shown in Figure 2. Although the particular simulated fuel assembly shown in Figure 2 is a BWR assembly comprising generally a 10x10 array of emulated nuclear fuel rods with a centered 3x3 array of rods removed and replaced by a central water channel, the present invention can be practiced with any simulated nuclear fuel assembly or any array of emulated nuclear fuel rods which do not make up a simulated nuclear fuel assembly. Neutron detectors, preferably standard source-range monitoring neutron detectors, are also located inside several, preferably all, of the same emulated fuel rods in which the neutron sources are located. A preferred type of source-range detector is a fission pulse counter commonly used as source range monitors (SRMs) in BWRs. Alternatively, fission-ion chambers which produce a current signal and which are commonly used as Local Power Range Monitors (LPRMs) in BWRs and pulse-type $BF_3$ detectors which are commonly used in laboratory applications and involve the measurement of thermal neutrons can be used.

The neutron sources emit fast neutrons, either intermediate energy neutrons if photoneutron sources are used, or high energy neutrons if fission sources are used. A typical photoneutron source is antimony-beryllium. The radioactive antimony of the source emits gamma rays which interact with beryllium producing neutrons at an energy of 26 keV.

In accordance with the present invention, the neutron source comprises a single or several distributed neutron sources which are supplemented by an array of capsules of fissionable material such as Uranium-235. Neutrons produced by a source are absorbed in Uranium-235 nuclei producing fission reactions which emit high energy fission neutrons with an average energy of 1.0 MeV. The fission neutron source utilized in the present invention is called a subcritical multiplication neutron source.

The fast neutrons produced by the fission neutron source undergo scattering collisions in the simulated test fuel assembly or array of emulated fuel rods with the moderating and surrounding material, and as a consequence the neutrons lose energy which is commonly known as the slowing-down or moderating process. After several collisions with the moderating medium, the high energy neutrons become thermalized in that they are low energy or slow neutrons approaching thermal equilibrium with their moderating medium. Water, which is the coolant in the test assembly as well as the coolant/moderator in an actual light water reactor fuel assembly, is an efficient moderating medium. More particularly, the slowing-down effectiveness is proportional to the water density and inversely proportional to the void fraction. The average void in the subchannel 50 surrounding the emulated fuel rod 30 is related to the thermal neutron flux. More specifically, the thermal neutron population density or thermal neutron flux in a subchannel 50 with high liquid water content is larger than the thermal neutron population density in a subchannel 50 with low liquid water content.

The neutron detectors utilized in the Void Distribution Measurement Apparatus of the present invention are sensitive in measuring the thermal neutron flux as contrasted to intermediate and fast neutrons. Thus, these neutron detectors are insensitive to intermediate and fast neutrons directly emanating from any source and are not affected by the presence of water and its amount.

The active length of the apparatus comprising each neutron source and neutron detector can be selected to vary according to fuel assembly parameters is typically six-to-twelve inches. The active length of the Void Distribution Measurement Apparatus comprising the neutron detectors is typically one inch. All the detectors are typically positioned at the same axial elevation within the simulated test assembly in order to obtain data at the same elevation within the simulated test fuel assembly. The active and sensitive dimensions of the apparatus can be chosen depending on optimization studies. The sensitive length of the Void Distribution Measurement Apparatus can be positioned at any predetermined axial elevation along the height of the simulated test assembly. The sources and detectors of the Void Distribution Measurement Apparatus are moved together within the emulated fuel rods to assure that the position of the detectors relative to the sources remains constant as the Void Distribution Measurement Apparatus is moved vertically through the simulated test assembly.

The emulated fuel rods contain a neutron multiplier (e.g. natural or enriched uranium metal or oxide), neutron source, and neutron detectors.

Thus, the Void Distribution Measurement Apparatus includes adding a multiplying medium and measuring neutron flux distribution to obtain information about void fraction in subchannels 50 of heated arrays.

The Void Distribution Measurement Apparatus also neutralizes the measurement bias for the special application of measuring the voids for reactivity feedback determination. More specifically, the void measurement technique of the present invention applies, in reverse, the same physical principles applied in determining fuel assembly reactivity via neutron transport calculations which include as an essential element the neutron interactions with the moderator distributed between the fuel rods and surrounding the fuel assembly. Should a bias exist in measuring the voids, the reverse bias will be present in the aforementioned reactivity calculation and the correct reactivity will still be obtained which is sufficiently accurate for fuel design and analysis applications. A principal application for the present invention is to experimentally investigate and further understand and characterize the phenomenology of boiling in light water reactors (LWR). The invention is appropriate for both boiling water reactor (BWR) and pressurized water reactor (PWR) nuclear fuel assembly applications. The information obtained from the use of the Void Distribution Measurement Apparatus and method of the present invention are used in nuclear fuel assembly design and performance analysis.

For example, the arrangement of the subchannels and the presence of any obstruction in the subchannels (spacers, tie plates, internal coolant channels, fluid flow deflectors, etc.) change the fluid flow and boiling characteristics of the assembly. Also, the presence of burnable absorbers in some fuel rods and movable control rods alter the emulated fuel rod power distribution; and the void distribution in the subchannels is both affected by and affects such variations in simulated fuel rod powers. The ability to accurately measure the average void in either several or, all of the subchannels provides valuable information for making design decisions.

In accordance with the present invention, either a full-scale or scaled simulated nuclear fuel assembly 10 of full 30 or part-length emulated fuel rods which are heated are used for hydraulic measurements such as pressure drop, void fractions, and critical heat flux. The emulated fuel rods 30 are made of hollow tubes 31 electrically heated by electric current passing through the tubes, and the desired axial heating distribution is achieved by varying the thickness of each tube 30 axially to change the electrical resistance. A capsule of fissionable material such as one or more nuclear fuel pellets 33 made of $UO_2$, a neutron source 35, as well as a neutron detector 37 is placed inside several of the heated tubes, one of which is shown foreshortened in length in Fig. (1). In a preferred embodiment, one or more nuclear fuel pellets 33, a neutron source 35 and a neutron detector 37 is placed inside each of the heated tubes. It is not, however, necessary that all emulated nuclear fuel rods contain source material. If $UO_2$ pellets are used, they can be made of natural Uranium or enriched Uranium so that the maximum possible effective multiplication factor is less than unity for reasons of criticality safety.

The amount of nuclear fuel or the number of $UO_2$ pellets and consequently the length of the Void Detection Measurement Apparatus can be varied to optimize the accuracy of the experiments. For resolution of axial variation of voids, the device active length (e.g., the amount of nuclear fuel or the number of fuel pellets) needs to be of similar magnitude or smaller than the axial resolution length desired. On the other hand, longer active length can improve the device sensitivity for the resolution of radial variations of voids and average planar value.

The placement of the detectors as well as the type and the placement of sources can be varied; for example, $UO_2$ pellets or uranium metal rods can be positioned with the source material, or one or more pellets of neutron source material can be placed in the stack of $UO_2$ pellets.

Although the present invention can measure the void distribution for each emulated fuel rod within a simulated test assembly by having a detector in each tube, the present invention can comprise an arbitrary number of detectors (less than one in each tube). Since a fraction or percentage of the coolant volume is associated with each detector, and the average void within each associated coolant volume is the quantity measured by the Void Distribution Measurement Apparatus of the present invention, the spatial resolution of the void distribution which the Void Distribution Measurement Apparatus measures is affected by the number of detectors in the Void Distribution Measurement Apparatus positioned within the simulated test assembly. Thus, the spatial resolution of the measured void distribution improves as the number of detectors (e.g. the density of the detector array) increases.

In accordance with the present invention, void fraction in a simulated nuclear fuel assembly of emulated nuclear fuel rods is measured by utilizing neutron thermalization of high energy neutrons and by measuring the thermal neutron flux by thermal neutron detectors positioned within emulated fuel rods of the fuel assembly. By utilizing an array of, instead of merely a single thermal neutron detector, the void distribution, i.e., the average void fraction in the various subchannels is measured. The spatial resolution of the void distribution measurement using the Void Distributior. Measurement Apparatus depends on the number of detectors utilized. If every tube contains a detector, then the average void in the subchannel associated with each tube can be determined. On the other hand, if fewer detectors are utilized (e.g. one detector for one group of four rods or one detector for every group of four rods, or one detector for one group of nine rods or one detector for every group of nine rods), then the average void fraction in these groups of subchannels can be determined. Specifically, the configuration of the emulated fuel rods and the subchannels associated with such configuration to be measured by the Void Distribution Measurement Apparatus determines the arrangement of the detectors. This affords flexibility of configuring the apparatus of the present invention to be suited or optimized for each particular application.

When N detectors are utilized, each detector has approximately a l/N fraction (or, 100/N percent) of the coolant volume associated with it. The corresponding measured void distribution is represented by N points. This configuration thus constitutes the best spatial resolution which can be achieved when N is equal to the total number of rods. The Void Distribution Measurement Apparatus of the present invention can be utilized and will function with fewer detectors. However, the resolution becomes correspondingly less precise as the number of detectors is decreased. For example, if N/2 detectors are utilized, the coolant volume associated with each detector is approximately 200/N percent of the total coolant volume and the corresponding measured void distribution is represented by N/2 points. The least precise spatial resolution of void distribution is obtained when only two detectors are utilized. In this configuration, the coolant volume associated with each detector is 50% of the total coolant volume and the corresponding measured distribution is represented by two points.

The use of one detector makes it possible only to measure the average void content at the plane of interest, but no information can be obtained regarding the void distribution, as is typical of the prior art. Thus, for example, U.S. Patent No. 5,098,641 uses gamma rays, whereas the present invention utilizes neutrons. This patent also employs line-of-sight attenuation principles wherein detection of unscattered radiation is the desired signal and detection of scattered radiation is undesirable, whereas the present invention relies solely on detection of scattered radiation. Furthermore, this patent discloses a detector which is sensitive to both unscattered and scattered radiation, whereas the source and detector properties of the present invention are chosen such that the detector is insensitive to source neutron energies, hence undesired detection events are largely eliminated. Perhaps most importantly, this patent works most effectively with a single source/detector pair, whereas the present invention works most effectively with multiple sources and multiple detectors. Consequently, this patent requires many experimental measurements to obtain the void distribution at a particular plane of a BWR test assembly, whereas the present invention requires only one experimental measurement to obtain the same information. Perhaps equally important, this patent is limited to the measurement of the void content of a line-of-sight portion of a single subchannel for each measurement event, whereas the present invention, due to its utilization of multiple detectors, can simultaneously measure the average void content in multiple subchannels (one subchannel being defined for each detector in the array).

In accordance with a process of the present invention, a void distribution measurement method involves the following steps after having established the desired heating and flow conditions in the test assembly:

    a) Position the void measurement apparatus at a desired elevation;
    b) Measure and record the output data from each neutron detector;
    c) Move the void measurement apparatus to another elevation;
    d) Measure and record the output data from each neutron detector;
    e) Repeat steps (c) and (d) until all desired elevations have been measured; and
    f) Evaluate the subchannel void distribution and void content with each set of detector responses.

One of the more important benefits of the present invention is that it allows for direct measurement of the distribution of water in the assembly and thereby enabling substantial improvements in fuel assembly designs.

The simulated fuel assembly shown as an example in Fig. (2) is modeled with a standard transport code or a standard Monte Carlo code to model the test assembly resolution in either two or three dimensions, respectively. The void fraction in each subchannel is varied and the change in flux is either determined by calibration experiments, or calculated by a neutron transport code or a three-dimensional Monte Carlo code as follows:

$$r(i,j) = \triangle\, phi(i)\, /\, \triangle\, alpha(j) \qquad\qquad \text{[Equation 1]}$$

where $r(i,j)$ is a matrix wherein the diagonal elements are numerically larger than the off-diagonal elements and $phi(i)$ is the neutron flux at emulated fuel rod i, and alpha (j) is the void fraction in subchannel j; and

$$\triangle\, phi(i) = Phi_{perturbed}(i) - Phi_{referenced}(i), \text{ and} \qquad\qquad \text{[Equation 2]}$$

$$\triangle\, alpha(j) = alpha_{perturbed}(j) - alpha_{referenced}(j)\, ; \qquad\qquad \text{[Equation 3]}$$

where

    $Phi_{perturbed}(i)$ is the flux in the tube(i) when one subchannel has voided moderator; and

    $phi_{referenced}(1)$ is the neutron flux of the tube(i) when the subchannels within the array of emulated fuel rods are filled with unvoided moderator; and

    $alpha_{perturbed}(j)$is the void fraction introduced in the subchannel(j) chosen for the pertubation measurement; and

    $alpha_{referenced}(j)$ is the void fraction when the array is filled with unvoided water and hence equal 0.

In order to define the response matrix, the number of determinations of the vector $Phi_{perturbed}$ to be obtained for an apparatus is at least the number of neutron detectors (and associated subchannels) for that apparatus. Since the elements $r(i,j)$ constitute a response matrix, R, with diagonal elements larger than off diagonal elements, it is therefore easily inverted as follows:

$$F = inv\ (R). \qquad\qquad \text{[Equation 4]}$$

The measurement of void distribution change is obtained as △alpha(j) which are elements of the vector △alpha. The latter is calculated from the measured flux vector △phi as follows where △alpha equals the dot product of the inverse R matrix (i.e. F) and △phi:

$$\triangle alpha = F \cdot \triangle phi. \qquad \text{[Equation 5]}$$

This is the basis of obtaining the subchannel void fractions from measuring emulated fuel rod fluxes.

The transport calculations are not the only method for obtaining information from the apparatus, as the determination of the matrix elements r(i,j) can be done by direct calibration measurements. These matrix elements can be obtained, for example (but not limited to), by inserting hollow Aluminum rods to create known voids in the subchannels, and perform direct measurements of fluxes of the simulated fuel rods.

Many of the nuclear reactor fuel assembly design decisions are based on calculations performed using detailed mathematical models incorporated into complex computer programs (e.g. design codes). Accurate measurements of the void distribution in the test assembly under a variety of fluid flow and heating conditions provide valuable data for benchmarking the design codes. Such measurements also provide a method for experimentally verifying fluid flow and boiling characteristics of manufactured products (e.g., measurements conducted in a test assembly constructed from components from an assembly line).

Two phase flow does not scale very well. Consequently, nearly all industrial work in the field is performed with prototypical geometrical configurations at prototypical temperatures and pressures. A substantial advantage of this invention is that it provides the void fraction information without disturbing the other conditions of the experiment, i.e., it is a non-intrusive measuring technique and works at the pressures, temperatures, and in the geometrical configurations of interest.

The principle advantage of the present invention is that it enables the measurement of the void fraction simultaneously in all selected subchannels as well as not obstructing the fluid flow characteristics in the subchannels. The void measurement apparatus does not obstruct fluid flow because the entire device comprising sources, detectors, cables, and a support structure is contained inside the hollow emulated fuel rods.

Another advantage of the present invention is the correspondence of the test assembly dimensions and the slowing-down (migration) length of fission neutrons in the test assembly environment. The average distance traveled by a fission neutron from birth (source energy) to detection (thermal energy) in the invention environment is in the range of 6 to 12 centimeters. The migration length (M) is also very sensitive to the moderator density of the environment (M = 6 for 0% voids and M = 12 for 80% voids are typical values) . Since the cross section of a BWR fuel assembly (hence, a test assembly simulating a BWR fuel assembly) is approximately 15x15 centimeters, the majority of the fission neutrons released from the sources contained in the present invention will attain thermal energy within the volume of the test assembly. More importantly, a significant fraction of the source neutrons will attain thermal energy within the active (detection) volume of the present invention. Thus, the present invention is not only very sensitive to the quantity being measured (the void content of the test assembly environment), but is also efficient with respect to the utilization of source neutrons. The latter aspect is important in the laboratory because it means that the present invention utilizes a small source strength, hence it produces small external dose rates due to escaped radiation.

While the foregoing description and drawings represent the preferred embodiments of the present invention, it will be apparent to those skilled in the art that various changes and modifications may be made therein without departing from the true spirit and scope of the present invention.

**Claims**

1. An emulated nuclear fuel rod comprising a hollow tube, within the hollow tube is positioned a fissionable material, a neutron source and a neutron detector.

2. The emulated nuclear fuel rod as in claim 1 wherein the fissionable material is selected from the group consisting of natural and enriched uranium.

3. The emulated nuclear fuel rod as in claim 2 wherein the fissionable material is $U^{235}$.

4. The emulated nuclear fuel rod as in claim 1 wherein the neutron source includes antimony-beryllium.

5. The emulated nuclear fuel rod as in claim 3 wherein the neutron source includes antimony-beryllium.

6. The emulated nuclear fuel rod as in claim 1 wherein the neutron detector is a standard source-range monitoring neutron detector.

**7.** The emulated nuclear fuel rod as in claim 6 wherein the neutron detector is a fission pulse counter.

**8.** The emulated nuclear fuel rod as in claim 5 wherein the neutron detector is a fission pulse counter.

**9.** An array of emulated nuclear fuel rods comprising:

a plurality of hollow tubes;
a plurality of fissionable material wherein at least one of the plurality of fissionable material being positioned within a corresponding one of the plurality of hollow tubes;
a plurality of neutron sources wherein at least one of the plurality of neutron sources being positioned within a corresponding one of the plurality of hollow tubes; and
a plurality of neutron detectors wherein at least one of the plurality of neutron detectors being positioned within a corresponding one of the plurality of hollow tubes.

**10.** An array as in claim 9 wherein each one of the plurality of hollow tubes has one of the plurality of fissionable material.

**11.** An array as in claim 9 wherein each one of the plurality of hollow tubes has one of the plurality of neutron sources.

**12.** An array as in claim 10 wherein each one of the plurality of hollow tubes has one of the plurality of neutron sources.

**13.** An array as in claim 9 wherein each one of the plurality of hollow tubes has one of the plurality of neutron detectors.

**14.** An array as in claim 10 wherein each one of the plurality of hollow tubes has one of the plurality of neutron detectors.

**15.** An array as in claim 11 wherein each one of the plurality of hollow tubes has one of the plurality of neutron detectors.

**16.** An array as in claim 12 wherein each one of the plurality of hollow tubes has one of the plurality of neutron detectors.

FIG 1

FIG 2